# EUROPEAN PATENT SPECIFICATION

(11) **EP 0 716 517 B1**
(45) Date of publication and mention of the grant of the patent: **04.06.2003**
(21) Application number: 94203579.1
(22) Date of filing: 09.12.1994
(51) Int. Cl.: H04H 1/00

(54) **System comprising means for extracting supplementary information from a sound channel, carrying an additional channel, and packetizer means for supplementing said sound channel with a second information sub-channel, and an attacher station for said system**
System mit einer Vorrichtung für die Extraktion von Daten aus einem Tonkanal mit einem zusätzlichen Datenübertragungskanal und einer Vorrichtung für die Erzeugung von Datenpaketen zur Ergänzung des Tonkanals mit einem zweiten zusätzlichem Datenkanal, sowie ein Endgerät für ein solches System
Système avec un dispositif pour extraire des informations supplémentaires d'un canal audiophonique, comportant un canal supplémentaire, et un générateur de pacquets produisant un deuxième canal supplémentaire pour le canal audiophonique, et un terminal pour ledit système

(43) Date of publication of application: 12.06.1996
(73) Proprietor: Koninklijke Philips Electronics N.V., 5621 BA Eindhoven (NL)
(72) Inventor: van Niekerk, Paulus Adrianus Wilhelmus, NL-5656 AA Eindhoven (NL); Vlot, Marnix Claudius, NL-5656 AA Eindhoven (NL)
(74) Representative: Peters, Rudolf Johannes

(56) References cited:
- EP-A- 0 389 689
- EP-A- 0 489 281
- WO-A-94/24784
- DE-U- 9 111 093
- FR-A- 2 651 352

## Description

### FIELD OF THE INVENTION

The invention relates to an audio system having
an attacher station for attaching to an audio representation channel that is provided with a first auxiliary information sub-channel and for decoding said auxiliary information; and
a user station fed by said attacher station through a unidirectional interface for receiving and selective displaying of said auxiliary information in an application context under control of a user interface;
said attacher station comprising extracting means for extracting said auxiliary information from said channel.

A nonlimitative example of such audio system with an attacher station is the radio data system (RDS) that supplements broadcast audio with various types of informations, such as the name of the actual broadcast station or transmitting authority, traffic announcements, and other. The attacher station then is the broadcast receiver. The representation of the audio itself may be analog or digital. Other examples of such audio system are based on the Digital Compact Cassette (DCC) tape system and the Compact Disc (CD) system, where the attacher station is the tape deck or the disc player, respectively. A similar system is feasible for other types of audio sources. In this respect, reference is had to EP-A2-325,325, corresponding US Serial Nos. 07/297,800, 07/741,230, and 08/300,002 (PHD 88009) to Philips and Du Pont Optical, to EP-A1-389,689, corresponding US Serial No. 07/499,914 (PHQ89006) to Philips and Du Pont Optical, and to EP-A2-561,435, corresponding US Serial No. 08/015,098 (PHQ 92003) to Polygram and Philips, all of these being herein incorporated by reference. These publications describe the so-called **I**nteractive **T**ext **T**ransmission **S**ystem (ITTS). The channel represents a continuous audio stream. It is envisioned that future systems will have a greater transmission capacity for the auxiliary information sub-channel. However, flexibility as based on the wishes of an individual user person is not possible on the level of the source. Moreover, the attacher station may be remote from the user station, which leads to restricted protocol facilities on the unidirectional interface. Furthermore, given the structure of the information sub-channel, hitherto after separating the information from the audio, no further interaction between the information and the audio was possible. A somewhat related situation may be illustrated for the Teletext system: after separating the Teletext information form the video, it cannot be recombined with the video to any degree, inasmuch as the two channels cannot be reconciled.

### SUMMARY TO THE INVENTION

Therefore, amongst other things it is an aspect of the present invention to introduce flexibility to the system on the level of the attacher station, so that the system can offer a wider scope for selection and manipulation of the sub-channel information. Now, according to one of its aspects the invention is, characterized in that said attacker station comprises:
a framework data generator for instantiating an application, the application comprising application information wherein said extracted first auxiliary information is inserted;
   and
framework packetizer means fed by said generator for supplementing said audio representation channel on said unidirectional interface in a second auxiliary information sub-channel by packetized and instantiated application information for said user station.

There are also provided an attacher station according to claim 10 and a user station according to claim 11.

In this way, the application may be personalized for a particular user, or be actualized for a particular situation. The term instantiatable of course means that the application gets the information, so that it becomes another version of the same application.

Advantageously, said system has input select means for selectively feeding said attacher station by one of a plurality of selectable audio source channels. In this way, a single attacher station can be controllably and selectably fed through a generic decoder by various sources, such as a tuner or an audio recorder deck. The application proper and further subsystems then sit behind the decoder, the system allowing for each selected source to supplement the audio by the instantiated information of the application in question.

Advantageously, said user interface is arranged for selective navigating through multiple applications as presentable by said attacher station, in that said user station has an interaction retrocoupler connection for transmitting selectional commands from said user station to said attacher station, and said attacher station comprises a multi-application framework data generator that is instantiatable by said information sub-channel. In this way, a user may navigate through multiple applications that are feasible with the available auxiliary information, without the necessity for massive intrusion into the attacher station hardware. The retrocoupler connection may be realized by a low-volume bus facility that is used otherwise for controlling the attacher station hardware, and would not cost extra: moreover, the user station need not know the meaning of the received control signals on the level of the application. This again means that the control signals may have an extremely limited vocabulary, inasmuch as further control must be effected at the user station. The combination of the multi-application framework data generator and the framework packetizer allow both for selecting among the multiple applications that are feasible as based on the information received in the attacher station, and also to supplement these applications by information that is privy to the attacher station in question. The packetizer can operate according to a straightforward procedure. Of course, a prerequisite is the presence of sufficient information in the sub-channel so that the navigation is feasible in principle. However, it has been found that a complex and intricate application can be based on an extremely limited information stream in the first auxiliary information sub-channel.

The invention also relates to an attacher station and to a user station for use in a system according to the invention. Various further advantageous aspects of the invention are recited in dependent Claims.

### BRIEF DESCRIPTION OF THE DRAWING

These and other aspects and advantages of the invention will be described hereinafter in detail with reference to the disclosed preferred embodiments, and in particular with reference to the appended Figures, that show:
Figure 1, an elementary system according to the invention;
Figure 2, a system with a digital tuner and an ITTS decoder;
Figure 3, a data stream diagram relating to Figure 2;
Figure 4, a detailed version of part of Figure 3;
Figure 5, a system with source selection.

### DETAILED DISCLOSURE OF PREFERRED EMBODIMENTS

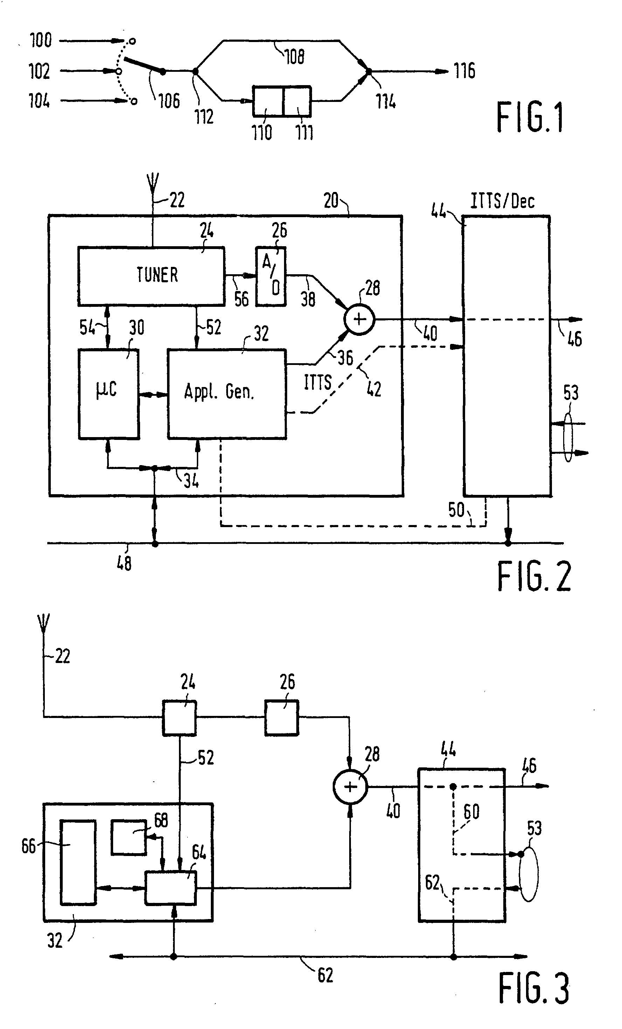

Figure 1 shows an elementary system according to the invention, and in particular those aspects that pertain to the attacher station. The audio channel is connected to input 112 of the attacher station. At that point, the information from the information subchannel is extracted for usage in block 110. Block 110 comprises a framework data generator. Such generator has the data structure of a computer program and contains a definition of the format of an application. Through this framework, the attacher station knows where to look for particular information in the information sub-channel, although the attacher station does not need to know what is the meaning of this information. This particular information is now used for insertion into the application information from the framework data generator, which application thereby becomes instantiated as depending on the content of and the selection from the information sub-channel. The instantiated application information is now fed into a framework packetizer 111. This device formats the information for adherence to an output information sub-channel. By itself, many of such sub-channels have been defined and standardized; in fact, it may have the same definition as the sub-channel received on input 112. Through multiplex device 114, the information packets are now recombined in an auxiliary information sub-channel together with the audio that was transferred on line 108. In so doing, the audio may have been converted as well, but this is not necessary. The unidirectional interface is fed to a user station that will be considered more in detail hereinafter. The system of Figure 1 has three parallel input channels 100, 102, 104. However, a much larger number is feasible, such as in the case of a multiplicity of broadcast stations, or a multiplicity of CD discs in a CD jukebox. The attacher station may select among these through selection means 106. This selecting may be controlled by a user person, or in various different ways by the system. The various channels may have identical dispositions, but their transmission standards may be different as well. In the latter case, the system should either know, or be able to recognize the connected channel, and in consequence, be able to correctly access the information sub-channel in question.

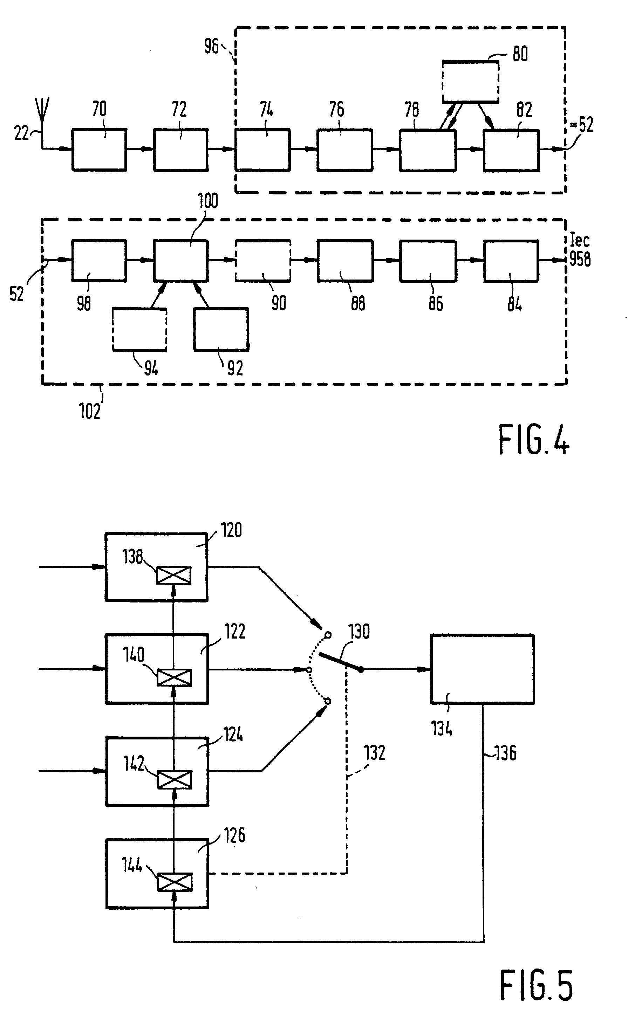

Figure 2 shows an embodiment of the invention based on a digital tuner for broadcast signals, and a so-called ITTS decoder according to the references supra. As such it builds upon the broadcast oriented version of the prior art, but the present embodiment by itself is understood not to represent a material restriction. The two main subsystems are an emulated digital tuner 20 at left and an ITTS decoder 44 at right. Emulated digital tuner 20 is based on a standard Philips FT930 FM tuner with Radio Data System (RDS) representation capability, and may extract from a broadcast program received, the name of an actual broadcast station, and such other information that is recurrently included in the analog signal. In this respect, the broadcast signal is received on antenna 22, whereas block 24 represents an analog tuner module that contains an 6805 microcontroller specifically programmed for the RDS decoding that is more specifically disclosed with reference to block 96 in Figure 4.

Tuner output 52 presents the RDS data packets, output 56 presents analog audio, and via bidirectional connection 54 communicates control signals with a microcontroller 30. This Toshiba TMP47C 1270N microcontroller controls various settings and other features of the tuner, such as controlling the tuner front-end, keyboard, display, EEPROM, and the 6805 RDS decoder, supra. Block 26 is an A/D converter for the audio and outputs a stream of digitized audio samples on line 38, that is an exemplary embodiment of a unidirectional interface.

ITTS decoder 44 at right receives digital information on line 40 according to the standardized IEC958 format. This format has been standardized worldwide for high-volume transport in an audio video environment, cf. Digital Audio Interface 1st Edition, March 1989, Commission electrotechnique Internationale, Genève, Switzerland. However, this particular standard is only by way of nonlimitative example. The digital information through mixer element 28 comprises the audio derived from line 38, interspersed with the ITTS packets received via line 36. The associated multiplexing has been performed by multiplexing device 28. The IEC 958 format may be used for the main audio channel, but also, or by way of alternative, for the second auxiliary information sub-channel. By itself, this standard format allows for audio transfer, as well as for data transfer. In case of a plurality of subchannels, their respective formats are in principle independent. Within decoder 44, the ITTS packets are extracted again from the signal stream, whereas the audio, together with the information in the sub-channel, is output on line 46 for further representation, such as for amplification or storage. As such, the latter is irrelevant to the present invention and not discussed further. The ITTS packets are displayed according to the standard ITTS format; accordingly, the user person may want to navigate through the present application or between various applications such as are listed hereinafter. Through the limited capability of the representation facilities at the user station, the user person can use instantaneously only a fraction of the auxiliary information that accompanies the audio data on input 22: on the other hand, according to the invention, random (spatial) accessibility to a certain extent replaces temporal accessibility. For this purpose, ITTS decoder 44 knows a set of Feedback Interactive Commands, which commands may be activated through manual selection on a full or partial keyboard. These commands by itself are more or less trivial to a decoder inside of an application. They send back argument calues to the origin site of the application, via bus 48. The application in its turn, reacts thereon. This is straightforward because the command had been packetized earlier at the side of the attacher station itself.

In this respect, item 53 symbolizes a bidirectional user interface. Line 48 represents a low-capacity bus that is conventionally used for transferring control signals for controlling various settings for audio/video parameters in the respective subsystems of such audio/video system. Embodiments may be based on one of the Enhanced Easylink, RS232, or D2B formats, the latter having been published in US Patent 4,429,384 to the present assignee. A further conventional embodiment is that the broadcast station is exchanged for a different station, such as a DCC tape recorder or a CD disc player. The same situation occurs then, in that DCC or CD could carry more auxiliary information than any single application would usefully need.

Block 32 represents an application generator. For each of a series of applications, the generator may produce an application framework. This may be extracted from a ROM store, inasfar as the framework is unalterable. Another realization is that the ROM contains a description of the framework, from which description the various deliverables (image, sound, etc.) may be extracted. Such deliverables are then supplemented or partially replaced by information received by broadcast. Hereinafter a restricted list of presently realizable and foreseeable applications is given:
a. Station preset menu: herein the ITTS can show a menu of options that may be selected, such as a list of preferred or preprogrammed broadcast stations. By means of the retrocoupling, these stations may then be activated in the tuner. In this case, the user station does not need to know specifics of these stations, such as their respective frequency bands.
b. Mix RDS-to-other conversion application with ITTS application from the broadcaster: here, part of the auxiliary information provided by a broadcaster is already in ITTS format. Thereby, the set of feasible applications is broadened, especially if a conversion is executed. One of the applications then functions as an umbrella for the others: if the umbrella application is known, it may convert any information from other applications into ITTS packets.
c. Status display: herein the status of the system can be displayed, such as programmed to a particular broadcast station, freerunning, or operating in a non-broadcast-receiver mode.
d. Radio controlled clock: the broadcast program recurrently carries actual time, that is extracted through the RDS feature and selectively displayed in any of the three standard ITTS formats.
e. Record traffic announcements for later playback: conventionally, such traffic announcements when received are instantaneously represented as speech. According to this particular application, their representation may be suspended until machine-controlled recall occurs, such as at the end of a particular broadcast program section, or until recall by a user person. Through visible signalization, the system may signal that a particular kind of information is 'on hold'.
f. Record this song the next time it is on: for this application, the audio source must provide each musical or other item with a unique identifier.
g. Make traffic information visible on large screen: in ITTS, the displayed information is formatted to 1, 2, or 21 lines of characters. If a television set is used for display, the image may contain even more than 21 lines. However, the TV set does not need to know the ITTS-origin of the displayed text.
j. Download program schedule: here, the program schedule of the broadcast station in question after reception is downloaded into local storage for later retrieval or usage.
k. Automatic labelling of recordings: also for this application the audio source must provide each musical or other item with a unique identifier.
l. What's on at the moment: also for this application the audio source must provide each musical or other item with a unique identifier.

Generally, the user person may call up one of the various applications: the associated output is then presented to the user station for display, while allowing subsequent commands by the user person for navigating through the application in question. The application is put to rest either by a terminating command by the user, or by a command to navigate to another of the applications.

Figure 3 shows a data stream diagram relating to the embodiment of Figure 2. Hardware items 22, 24, 26, 28, 32, 40, 44, 46, 52, 53 have been labelled in correspondence to Figure 1. Interconnection 52 transfers the split-off RDS auxiliary information to application generator 32. There, control element 64 receives selectional commands via line 62. These call the relevant application from local ROM 66, which application directs what RDS information items should be stored in RAM 68, and subsequently, how the latter should supplement or replace particular information from the application in question to be forwarded via connection 36 and multiplexer 28 to user station 44. There, the information is extracted again for outputting via line 60. Further user control signals may subsequently be specified via line 62.

Figure 4 shows a detailed version of part of Figure 2, in particular the flow of the data through the RDS decoder (part of tuner 24 in Figure 2) and the RDS to ITTS converter. Audio and control signals have not been shown for clarity. Antenna 22 feeds the tuner with raw broadcast. RDS decoder 72 outputs RDS bits. Inside the 6805 RDS decoder 96, first block 74 executes error synchronizing and error correcting. Block 76 is a filter that only transmits bits that are relevant to the application in question. For example, in stationary usage, the apparatus does not need to know alternative frequencies of the transmitter. Block 78 is an event generator that detects coherence among the sub-channel informations received, such the completion of a particular message structure; the information is thereupon is stored into storage 80. Subsequently, acquisition element 82 reads out store 80, and outputs the data under the I2C protocol on line 52; cf. US-A-4,689,740 to the present assignee.

RDS to ITTS converter 102 receives I2C data and converts the characters therein to text (block 98): this text must subsequently instantiate the application. Block 94 is a patch table that forms part of ROM 66 in Figure 2: this specifies the positions in the application framework that must be filled with instantiating data. Block 92 is a preset table that is stored in RAM, preferably in non-volatile RAM, in view of possible modifications. It contains information that is necessary inside an application, but which will not be received from outside. Therefore, it must be inserted into the framework of the application in question. An example is the preset table of a tuner. The output of blocks 92, 94, 98 is combined in patch table block 100 to form the instantiated application framework, and subsequently forwarded to block 90 for the forming or packetizing into ITTS packets. These packets in scheduler 88 are transmitted cyclically. Block 86 is a 3 to 4 encoder that prepares the IEC958-standard-specific information; for brevity, it has not been discussed further. At its output, it provides user data. Block 84 is the well-known **D**igital **A**udio **I**n-**O**ut (DAIO) encoder circuit encoder that outputs protocollized IEC 958 data. For brevity, the latter has not been detailed further.

Figure 5 shows a system according to the invention with source selection. The respective blocks are Tuner 120, Digital Compact Cassette (DCC) deck 122, Compact Disc (CD) Player 124, and Amplifier 126, of which the first three may operate as an audio source that also outputs an information sub-channel. One of these three may be selected by selector 130 for connection to ITTS decoder 134 that is located in block 44 in Figure 2. ITTS decoder 134 feeds a retrocoupler connection 136 (cf. item 48 in Figure 2) that in each of the blocks 120, 122, 124, 126 feeds a respective application generator block 138, 140, 142, 144 with selectional commands. Amplifier 126 with local application generator block 144 form a selection signal for selector 130 via line 132. Amplifier block 126 may be located behind user station 44 in Figure 2. For clarity, the audio paths have not been specified in Figure 5.

Various other fields of usage of the present invention would now become obvious to the skilled art practitioner: other members of the CD and DCC family could be used; the audio channel may be part of a television channel at a higher level; the audio source may be an analog Compact Cassette deck; next to data, the information sub-channel may transfer executables and whole applications. Likewise, scripts may be transferred. Applications may be built from elements of a scripting language; commands therefore could emanate from the user station or be produced internally. Furthermore, the object of the applications could be different from the ones discussed supra, such the controlling of the audio system; the object of the application can be the straightout selection of a useful part of all data, such as the data in an RDS environment; generally, through the apparent simplification, as experienced by a user person, of the control of the whole complex audio system, many applications now become feasible that up to now were felt to impose an overly heavy burden on the human operator.

## Claims

1. An audio system having:
an attacher station (20) for attaching to an audio representation channel that is provided with a first auxiliary information sub-channel (52) and for decoding said auxiliary information; and
a user station (44, 53) fed by said attacher station through a unidirectional interface (40) for receiving and selective displaying of said auxiliary information in an application context under control of a user interface;
said attacher station comprising extracting means (72) for extracting said auxiliary information from said channel
**characterized in that** said attacher station comprises:
a framework data generator (32) for instantiating an application, the application comprising application information wherein said extracted auxiliary information is inserted; and
framework packetizer means (90) fed by said generator for supplementing said audio representation channel on said unidirectional interface in a second auxiliary information sub-channel by packetized and instantiated application information for said user station.

2. A system as claimed in Claim 1, and having input selection means (130) for selectively feeding said attacher station (20) by one of a plurality of selectable audio source channels.

3. A system as claimed in Claim 1 or 2, wherein said user interface (53) is arranged for selective navigating through multiple applications as presentable by said attacher station (20), in that said user station has an interaction retrocoupler connection (50) for transmitting selectional commands from said user station to said attacher station, and said attacher station comprises a multi-application framework data generator (32) that is instantiatable by said first auxiliary information sub-channel.

4. A system as claimed in Claim 1, 2 or 3, wherein said audio is digital audio.

5. A system as claimed in any of Claims 1 to 4, wherein said unidirectional interface (40) supports an ITTS protocol.

6. A system as claimed in any of Claims 1 to 5, wherein said framework data generator is based on non-volatile memory (66) for in said non-volatile memory storing said applications.

7. A system as claimed in any of Claims 1 to 6, wherein said unidirectional interface (40) is IEC958 based.

8. A system as claimed in any of Claims 1 to 6, wherein said second auxiliary information sub-channel (36) is IEC958 based.

9. A system as claimed in any of Claims 3 to 8, wherein said retrocoupler connection (50) is a bus that is shared among a plurality of stations.

10. An attacher station (20) for use in a system as claimed in any of Claims 1 to 9, comprising means for attaching to an audio representation channel that is provided with a first auxiliary information sub-channel (52) and for decoding said auxiliary information, and transmitting the auxiliary information to a user station (44,53) through a unidirectional interface (40), the attacher station comprising extracting means (72) for extracting said auxiliary information from said channel, a framework data generator (32) for instantiating an application, the application comprising application information wherein said extracted auxiliary information is inserted, and framework packetizer means (90) fed by said generator for supplementing said audio representation channel on said unidirectional interface in a second auxiliary information sub-channel by packetized and instantiated application information for said user station.

11. A user station (44, 53) for use in a system as claimed in any of Claims 1 to 9, comprising means for receiving auxiliary information from an attacher station (20) through a unidirectional interface (40) and selectively displaying said auxiliary information in an application context under control of a user interface (53) comprised in said user station (44), wherein said user interface (53) is arranged for selective navigating through multiple instantiated applications as presentable by said attacher station (20), in that said user station has an interaction retrocoupler connection (50) for transmitting selectional commands from said user station to said attacher station.

## Patentansprüche

1. Audiosystem, das die nachfolgenden Elemente umfasst:
- ein Endgerät (20) zum Anhängen an einen Audio-Wiedergabekanal, der mit einem ersten Hilfskanal (52) für Hilfsinformation versehen ist und zum Decodieren der genannten Hilfsinformation, und
- eine Benutzerstation (44, 53), gespeist durch das genannte Endgerät über eine Einrichtungsschnittstelle (40) zum Empfangen und selektiven Wiedergeben der genannten Hilfsinformation in einem Applikationskontext unter Ansteuerung einer Benutzerschnittstelle, wobei das genannte Endgerät Extrahiermittel (72) aufweist zum Extrahieren der genannten Hilfsinformation aus dem genannten Kanal, **dadurch gekennzeichnet, dass** das genannte Endgerät die nachfolgenden Elemente umfasst:
- einen Framework-Datengenerator (32) zum Instanzieren einer Applikation, wobei diese Applikation Applikationsinformation enthält, wobei die genannte extrahierte Hilfsinformation eingefügt wird, und
- Framework Packetizermittel (90), gespeist durch den genannten Generator zum Ergänzen des genannten Audio-Wiedergabekanals bei der genannten Einrichtungsschnittstelle in einem zweiten Hilfskanal für Hilfsinformation durch paketierte und instanzierte Applikationsinformation für die Benutzerstation.

2. System nach Anspruch 1, und mit Eingangsselektionsmitteln (130) zum selektiven Speisen des genannten Endgeräts (20) durch einen Kanal einer Anzahl selektierbarer Audio-Quellenkanäle.

3. System nach Anspruch 1 oder 2, wobei die genannte Benutzerschnittstelle (53) vorgesehen ist zum Selektiven Navigieren durch eine Vielzahl von Applikationen, wie diese durch das genannte Endgerät (20) präsentiert werden können, wobei die genannte Benutzerstation eine Interaktionsrückkopplungsverbindung (50) aufweist zum Übertragen von Befehlen von der genannten Benutzerstation zu dem genannten Endgerät, und wobei das genannte Endgerät einen Mehrzweck-Framework-Datengenerator (32) aufweist, der durch den genannten Hilfskanal für die erste Hilfsinformation instanzierbar ist.

4. System nach Anspruch 1, 2 oder 3, wobei das genannte Audio digitales Audio ist.

5. System nach einem der Ansprüche 1 bis 4, wobei die genannte Einrichtungsschnittstelle (40) ein ITTS-Protokoll unterstützt.

6. System nach einem der Ansprüche 1 bis 5, wobei der genannte Framework-Datengenerator auf einem nicht-flüchtigen Speicher (66) basiert ist, um in dem genannten nicht-flüchtigen Speicher die genannten Applikationen zu speichern.

7. System nach einem der Ansprüche 1 bis 6, wobei die genannte Einrichtungsschnittstelle (40) auf IEC958 basiert ist.

8. System nach einem der Ansprüche 1 bis 6, wobei der genannte zweite Hilfskanal (36) für Hilfsinformation auf IEC958 basiert ist.

9. System nach einem der Ansprüche 3 bis 8, wobei die genannte Rückkopplungsverbindung (50) ein Bus ist, der von einer Anzahl Stationen gemeinsam benutzt wird.

10. Endgerät (20) zur Verwendung in einem System nach einem der Ansprüche 1 bis 9, mit Mitteln zum Anhängen an einen Audio-Wiedergabekanal, der mit einem ersten Hilfskanal (52) für Hilfsinformation versehen ist und zum Decodieren der genannten Hilfsinformation und zum Übertragen der Hilfsinformation zu einer Benutzerstation (44, 53) über eine Einrichtungsschnittstelle (40), wobei dieses Endgerät Extrahiermittel (72) aufweist zum Extrahieren der genannten Hilfsinformation aus dem genannten Kanal, einen Framework-Datengenerator (32) zum Instanzieren einer Applikation, wobei diese Applikation Applikationsinformation enthält, in welche die genannte extrahierte Hilfsinformation eingefügt wird, und Frarnework-Packetizermittel (90), gespeist durch den genannten Generator zum Ergänzen des genannten Audio-Wiedergabekanals an der genannten Einrichtungsschnittstelle in einem zweiten Hilfskanal für Hilfsinformation durch paketierte und instanzierte Applikationsinformation für die genannte Benutzerstation.

11. Benutzerstation (44, 53) zur Verwendung in einem System nach einem der Ansprüche 1 bis 9, mit Mitteln zum Empfangen von Hilfsinformation von dem Endgerät (20) über eine Einrichtungsschnittstelle (40) und zum selektiven Wiedergeben der Hilfsinformation in einem Applikationskontext unter Ansteuerung einer Benutzerschnittstelle (53) in der genannten Benutzerstation (44), wobei die genannte Benutzerschnittstelle (53) vorgesehen ist zum Selektiven Navigieren durch eine Vielzahl instanzierter Applikationen, wie diese durch das genannte Endgerät (20) präsentiert werden können, wobei die genannte Benutzerstation eine Interaktionsrückkopplungsverbindung (50) zum Übertragen von Befehlen von der genannten Benutzerstation zu dem genannten Endgerät aufweist.

## Revendications

1. Système audio comprenant :
une station de connexion (20) pour une connexion à une voie de représentation audio qui est dotée d'une première sous-voie d'informations auxiliaire (52) et pour un décodage desdites informations auxiliaires, et
une station utilisateur (44, 53) alimentée par ladite station de connexion par le biais d'une interface unidirectionnelle (40) pour recevoir et afficher de manière sélective lesdites informations auxiliaires dans un contexte d'application sous le contrôle d'une interface utilisateur,
ladite station de connexion comportant des moyens d'extraction (72) pour extraire lesdites informations auxiliaires de ladite voie,
**caractérisé en ce que** ladite station de connexion comprend :
un générateur de données de charpente (32) pour instancier une application, l'application comprenant des informations d'application dans lesquelles lesdites informations auxiliaires extraites sont insérées, et
des moyens de génération de paquets de charpente (90) alimentés par ledit générateur, pour compléter ladite voie de représentation audio sur ladite interface unidirectionelle dans une seconde sous-voie d'informations auxiliaire par des informations d'application en paquets et instanciées pour ladite station utilisateur.

2. Système suivant la revendication 1, et comprenant des moyens de sélection d'entrée (130) pour alimenter de manière sélective ladite station de connexion (20) avec l'une de diverses voies de source audio pouvant être sélectionnées.

3. Système suivant la revendication 1 ou 2, dans lequel ladite interface utilisateur (53) est agencée de manière à permettre une navigation sélective dans de multiples applications comme cela peut être présenté par ladite station de connexion (20), en ce que ladite station utilisateur comprend une connexion de rétrocoupleur à interaction (50) pour transmettre des instructions de sélection entre ladite station utilisateur et ladite station de connexion, et en ce que ladite station de connexion comprend un générateur de données de charpente à applications multiples (32) qui peut être instancié par ladite première sous-voie d'informations auxiliaire.

4. Système suivant la revendication 1, 2 ou 3, dans lequel ledit contenu audio est un contenu audio numérique.

5. Système suivant l'une quelconque des revendications 1 à 4, dans lequel ladite interface unidirectionnelle (40) supporte un protocole ITTS.

6. Système suivant l'une quelconque des revendications 1 à 5, dans lequel ledit générateur de données de charpente repose sur une mémoire non volatile (66) afin de stocker lesdites applications dans ladite mémoire non volatile.

7. Système suivant l'une quelconque des revendications 1 à 6, dans lequel ladite interface unidirectionnelle (40) repose sur la norme CEI 958.

8. Système suivant l'une quelconque des revendications 1 à 6, dans lequel ladite seconde sous-voie d'informations auxiliaire (36) repose sur la norme CEI 958.

9. Système suivant l'une quelconque des revendications 3 à 8, dans lequel ladite connexion de rétrocoupleur (50) est un bus partagé entre plusieurs stations.

10. Station de connexion (20) destinée à être utilisée dans un système tel que revendiqué dans l'une quelconque des revendications 1 à 9, comprenant des moyens pour une connexion à une voie de représentation audio qui est dotée d'une première sous-voie d'informations auxiliaire (52) et pour le décodage desdites informations auxiliaires, et la transmission des informations auxiliaires à une station utilisateur (44, 53) par le biais d'une interface unidirectionnelle (40), la station de connexion comportant des moyens d'extraction (72) pour extraire lesdites informations auxiliaires de ladite voie, un générateur de données de charpente (32) pour instancier une application, l'application comprenant des informations d'application dans lesquelles lesdites informations auxiliaires extraites sont insérées, et des moyens de génération de paquets de charpente (90) alimentés par ledit générateur, pour compléter ladite voie de représentation sur ladite interface unidirectionelle dans une seconde sous-voie d'informations auxiliaire par des informations d'application en paquets et instanciées pour ladite station utilisateur.

11. Station utilisateur (44, 53) destinée à être utilisée dans un système tel que revendiqué dans l'une quelconque des revendications 1 à 9, comprenant des moyens pour recevoir des informations auxiliaires provenant d'une station de connexion (20) par le biais d'une interface unidirectionnelle (40) et pour afficher de manière sélective lesdites informations auxiliaires dans un contexte d'application sous le contrôle d'une interface utilisateur (53) incluse dans ladite station utilisateur (44), ladite interface utilisateur (53) étant agencée de manière à permettre une navigation sélective dans des applications multiples comme cela peut être présenté par ladite station de connexion (20), et ladite station utilisateur comprenant une connexion de rétrocoupleur à interaction (50) pour transmettre des instructions de sélection entre ladite station utilisateur et ladite station de connexion.
